# EUROPEAN PATENT SPECIFICATION

(11) **EP 0 530 659 B1**
(45) Date of publication and mention of the grant of the patent: **05.11.1997**
(21) Application number: 92114519.9
(22) Date of filing: 26.08.1992
(51) Int. Cl.: H01M 4/38

(54) **Method of manufacturing a hydrogen storage alloy electrode**
Verfahren zur Herstellung einer Elektrode aus wasserstoffspeichernder Legierung
Procédé de fabrication d'un electrode en alliage emmagasinant l'hydrogène

(30) Priority: 29.08.1991 JP 298612/91; 19.11.1991 JP 354180/91; 04.06.1992 JP 144425/92
(43) Date of publication of application: 10.03.1993
(73) Proprietor: THE FURUKAWA ELECTRIC CO., LTD., Tokyo (JP); THE FURUKAWA BATTERY CO., LTD., Yokohama, 240 (JP)
(72) Inventor: Sawa, Haruo, Iwaki-shi, Fukushima-ken (JP); Imai, Takahiro, Kumagaya-shi, Saitama-ken (JP)
(74) Representative: Hansen, Bernd, Dr. Dipl.-Chem.

(56) References cited:
- EP-A- 0 251 384
- EP-A- 0 293 660
- EP-A- 0 440 843
- FR-A- 2 623 271
- US-A- 4 728 586
- US-A- 4 859 413

## Description

The present invention relates to a hydrogen storage alloy electrode used as a negative electrode in, for example, a rechargeable battery and a method of manufacturing thereof.

A nickel-hydride battery comprising a negative electrode formed of a hydrogen storage alloy, a positive electrode formed of nickel hydroxide, and an alkaline solution used as an electrolyte attracts attentions as a rechargeable battery having a high energy density and free from air pollution and water contamination problem. The hydrogen storage alloy used for forming the negative electrode includes, for example, rare earth and nickel system AB₅ type alloy such as LaNi₅ and MmNi₅ (Mm: misch metal), titanium and nickel system alloy such as Ti₂Ni and TiNi, and an alloy containing as a base material an alloy represented by formula AB₂ and having a Laves phase.

A pasted type method is generally used for manufacturing an electrode using a hydrogen storage alloy. In this method, a hydrogen storage alloy ingot is pulverized by a milling apparatus under the air atmosphere. The pulverized alloy is slurried in water together with a thickener and a binder to prepare a paste. Then, porous substrate or perforated sheet made of metal is filled with the paste, followed by drying so as to obtain a desired electrode. Alternatively, the substrate or sheet is coated with the paste for manufacturing the desired electrode. Conventional method also includes a sintering method, in which a hydrogen storage alloy powder is sintered together with a metal net.

However, the hydrogen storage alloy powder prepared by the conventional method is relatively low in its activity and, thus, the electrode prepared by using the hydrogen storage alloy thus prepared is relatively low in its discharge capacity. As a result, it is necessary to repeatedly carry out the charge/discharge cycling many times before the hydrogen storage alloy is enabled to exhibit the maximum discharging capacity. Further, the discharge capacity of the hydrogen storage alloy is lowered during the preservation over a long period of time. It should be noted in this connection that layer made of chemically stable oxides of elements such as La, Ti and Zr are formed on the surface of the powdery particle of the hydrogen storage alloy in the step of pulverizing a hydrogen storage alloy ingot in a milling apparatus or the step of preserving the obtained hydrogen storage alloy powder. The oxide layers thus formed are considered to inhibit the electrode reaction, leading to the lowered discharge capacity noted above. In the conventional pasted type method, polymers such as the thickener and binder cover the surface of the hydrogen storage alloy, resulting in a low reactivity on the surface of the hydrogen storage alloy. It should be noted in particular that a thickener such as carboxymethyl cellulose (CMC), which is used in the step of preparing a paste using a water, is high in hydrophilic nature and, thus, the surface of the hydrogen storage alloy is uniformly wetted. It follows that CMC attached to the surface of the alloy impairs the reduction and recombination reaction of the oxygen gas or the hydrogen gas absorption on the negative electrode formed of the hydrogen storage alloy, leading to increase in the internal gas pressure of the cell in the overcharge step. What should also be noted is that the loading amount of the hydrogen storage alloy is decreased by the presence of the thickener and binder.

The sintering method certainly permits diminishing the volume occupied by components other than the active materials. In the sintering method, however, it is necessary to apply a heat treatment at about 1100°C under an inert atmosphere, with the result that the manufacturing apparatus of the electrode is made complex. Also, the surface of the hydrogen storage alloy is stained with, for example, oxides in the step of the heat treatment at high temperatures, leading to a low reactivity on the surface of the hydrogen storage alloy.

EP-A-0251384 relates to an electrochemical cell having a negative electrode of a stable hydride-forming material, in which a high power density at a low temperature and a rapid activation (as a function of the number of charge and discharge cycles) are obtained by adding to the electrochemically active material one or more metals selected from the group formed by Ni, Pd, Pt, Ir and Rh.

The metals may be provided by electrodeposition, electroless plating, reduction using hydrogen or decomposition of an organometallic compound, for example, but does not disclose any teaching of removing an oxide film by utilizing a mechanical impact.

An object of the present invention is to provide a a hydrogen storage alloy electrode capable of improving the reaction activity and maintaining a high discharge capacity over a long period of time and excellent in durability and preservation capability, and to provide a method of manufacturing thereof capable to readily manufacture a hydrogen storage alloy electrode.

Subject matter of the present invention is a method of manufacturing a hydrogen storage alloy electrode according to Claim 1.

Preferred embodiments thereof are subject matter of Claims 2 to 7.

A further subject matter of the present invention is a powder for the preparation of a hydrogen storage alloy electrode according to Claim 8.

This invention can be more fully understood from the following detailed description when taken in conjunction with the accompanying drawings, in which:

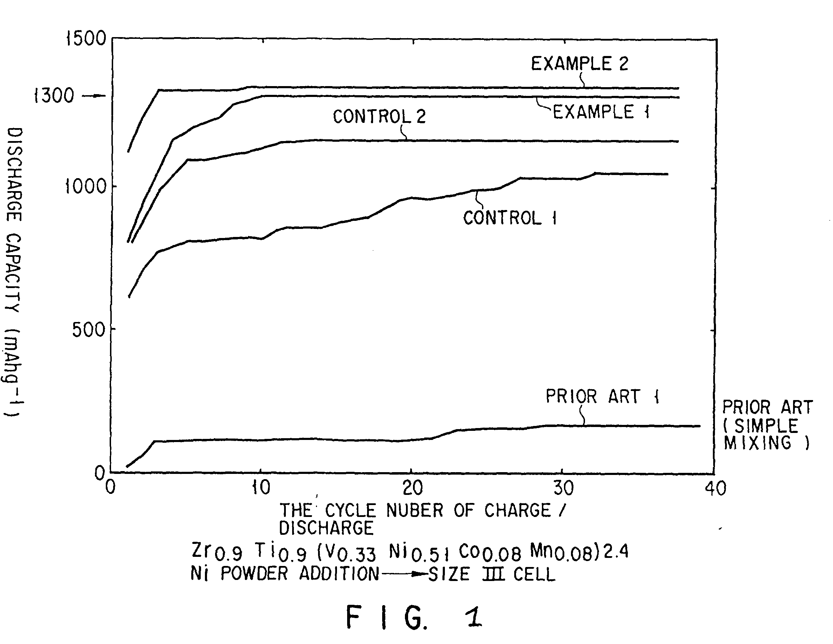

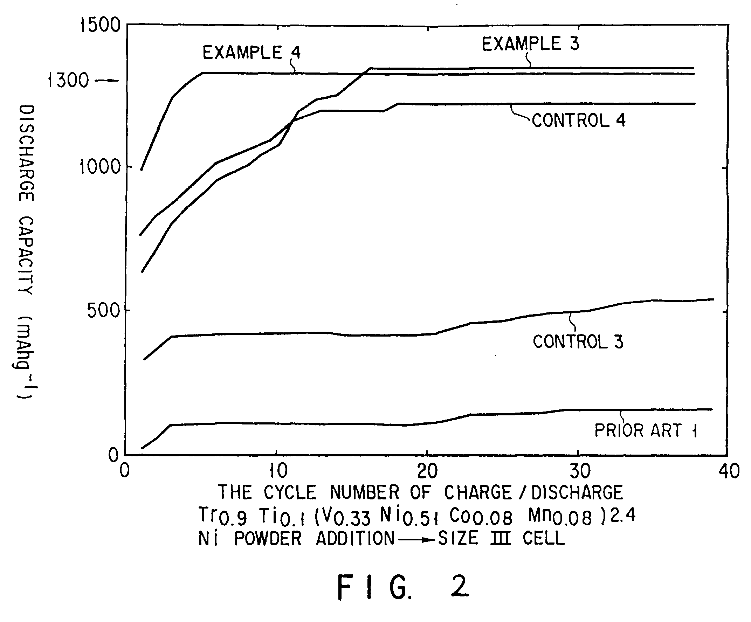

Figs. 1 and 2 are graphs each showing the relationship between the discharge capacity and the charge/discharge cycling for cells prepared by using the hydrogen storage alloy electrodes of the present invention.

The hydrogen storage alloys used in the present invention include, for example, rare earth and nickel system AB₅ type alloy, titanium and nickel system alloy, zirconium and nickel system alloy, an alloy containing zirconium-based Laves phase, Zr-V-Ni pseudo-binary Laves phase system alloy which represented by a formula:

Zr₁₋ₐTiₐ(V_{0.33+x}Ni_{0.67-x-b}A_{b})_{2+c}

where ≦ a ≦ 0.7, -0.05 < x < 0.07, 0 < b ≦ 0.4, 0 ≦ c ≦ 1, A = Fe, Co, Mn. It is desirable for the hydrogen storage alloy powder used in the present invention to have an average particle diameter of about 1 µm. Also, coarse particles having an average particle diameter of 1 millimeter to several millimeters can be used in the present invention. In the case of using coarse powdery material, oxidation of the hydrogen storage alloy in pulverizing step can be suppressed effectively, making it possible to obtain a hydrogen storage alloy electrode with a further improved activity.

The metal used in the present invention together with the hydrogen storage alloy includes copper, nickel, cobalt.

The metal used in the present invention may be a powder having an average particle diameter of about 0.1 µm or a coarse powder having an average particle diameter of 1 to several millimeters.

A stainless steel ball mill may be used in the present invention as a milling apparatus with a closed system.

The binder which is added to a milled powdery mixture in the present invention includes, for example, a polytetrafluroethylene powder, a polyvinylidene fluoride powder, etc. The binder should be added to the milled powdery mixture in an amount of not more than 1.5% by weight. If the amount of the binder exceeds 1.5% by weight, the amount of the hydrogen storage alloy powder filled in the substrate for electrode is to be small.

In order to improve the mechanical strength of the hydrogen storage alloy electrode, it is desirable to apply a heat treatment at not higher than 1100°C after the pressure molding step. If the temperature for the heat treatment exceeds 1100°C, the metal coated on the surface of the hydrogen storage alloy particle is diffused into the inside of the particle. Alternatively, the hydrogen storage alloy is oxidized hardly by the impure oxygen in the system.

A natural oxide film is formed on the surface of the powdery particle of the hydrogen storage alloy. In the present invention, the natural oxide film is broken or peeled off by the mechanical impact in the step of milling the mixed powder in a milling apparatus. In this step, the powdery particles of the metal added to the hydrogen storage alloy are strongly pressed against the hydrogen storage alloy particles, with the result that at least a part of the surfaces of the hydrogen storage alloy particles are covered with the metal in place of the oxide film. It follows that the milled powdery mixture prepared in the present invention exhibits a high discharge capacity with a smaller number of charge/discharge cycling. In addition, the hydrogen storage alloy is prevented from oxidation, making it possible to preserve the milled powdery mixture of the hydrogen storage alloy over a long period of time. Incidentally, where the hydrogen storage alloy is in the form of a coarse powder having an average particle diameter of 1 millimeter to several millimeter, the alloy is less likely to be oxidized by the air because the specific surface area of the coarse powder is smaller than that of a fine powder. It follows that it is possible to obtain a milled powdery mixture having a higher activity in the case of using a coarse powder.

In the present invention, the milling treatment is carried out in a milling apparatus with a closed system, not in an open apparatus such as a mortar. Thus, the hydrogen storage alloy particles are prevented from oxidation during the period ranging between the peeling of the natural oxide film from the particle and the covering of the particle surface with the metal, leading to an improved activity on the surface of the hydrogen storage alloy particle. The hydrogen storage alloy electrode obtained by using this milled powdery mixture exhibits high discharge capacity. The milling treatment within a closed system also permits controlling the oxidation of the hydrogen storage alloy powder.

In general, a hydrogen storage alloy has a high hardness, making it difficult to have the alloy attached to another material by applying pressure. Of course, it is difficult to prepare an electrode sheet by having a non-treated hydrogen storage alloy alone attached to a conductive substrate by the pressure molding. To overcome the difficulty, a heat treatment at about 1100°C is applied together with the pressure molding in the conventional sintering method.

On the other hand, the hydrogen storage alloy particles covered with the metal as in the present invention exhibit a high adhesiveness, making it possible to obtain an electrode sheet of a considerably high mechanical strength by the pressure molding method. Even in this case, it is desirable to apply a heat treatment for improving the mechanical strength of the electrode sheet. Small alloy particles covered with the metal have a high surface energy, with the result that the alloy particles are sufficiently bonded to each other even at a relatively low temperature. Further, an electrode sheet having a high mechanical strength can be effectively prepared by the hot pressing treatment.

Where a heat treatment is applied at temperatures not higher than 1100°C, the oxidation rate is lowered so as to suppress the oxidation on the surface of the hydrogen storage alloy particle. Also, metal oxides such as nickel oxide or copper oxide are readily reduced electrochemically within an alkaline electrolyte. Thus, the metal oxide, even if formed on the surface of the alloy particle, is reduced into the metal in the charge process. It follows that the hydrogen storage alloy particles covered with, particularly, nickel or copper exhibit a high reactivity even if a metal oxide is formed in the heating step. It should be noted, however, that, if the heat treatment is carried out at a temperature higher than 1100°C, the metal covering the alloy particle such as nickel or copper is diffused into the hydrogen storage alloy particle so as to form an alloy. It follows that it is necessary to avoid the heat treatment at a temperature higher than 1100°C.

For improving the mechanical strength of the electrode sheet, it is also desirable to add in advance a powdery material of a polymer binder such as polytetrafluoroethylene (PTFE) or polyvinylidene fluoride (PDVF) to a hydrogen storage alloy powder, followed by subjecting the mixed powder to pressure molding so as to prepare an electrode sheet. If a milling apparatus is used in the mixing step, a sufficient mechanical strength can be obtained even if the amount of the binder is 1.5% by weight or less because the mixed powder exhibits a high adhesiveness. In other words, it is possible to diminish the volume occupied by the binder in the hydrogen storage alloy electrode.

### Example 1

A mixed powder was prepared by adding 2.8g of a nickel powder having an average particle diameter of 0.3 µm to 20g of a hydrogen storage alloy powder prepared by pulverizing an ingot of Zr-containing Laves phase alloy of Zr_{0.9}Ti_{0.1}(V_{0.33}Ni_{0.51}Co_{0.08}Mn_{0.08})_{2.4} to have an average particle diameter of about 1 mm. The mixed powder was milled for 1 hour under the air atmosphere within a stainless steel ball mill so as to obtain a milled powdery mixture consisting of the hydrogen storage alloy and nickel. The milled powdery mixture was found to have a particle diameter of less than 63 µm, and at least a part of the hydrogen storage alloy particle was covered with nickel.

### Example 2

A milled powdery mixture consisting of a hydrogen storage alloy and nickel was prepared as in Example 1, except that the milling treatment was carried out for 5 hours.

### Example 3

A mixed powder was prepared by adding 2.8g of a copper powder having an average particle diameter of 0.8 to 1.2 pm to 20g of the hydrogen storage alloy powder equal to that used in Example 1. The mixed powder was milled for 1 hour under the air atmosphere within a stainless steel ball mill so as to obtain a milled powdery mixture consisting of the hydrogen storage alloy and copper. The milled powdery mixture was found to have an average particle diameter of 63 µm, and at least a part of the hydrogen storage alloy particle was covered with copper.

### Example 4

A milled powdery mixture consisting of a hydrogen storage alloy and copper was prepared as in Example 1, except that the milling treatment was carried out for 5 hours.

### Prior Art 1

A hydrogen storage alloy powder having an average particle diameter of less than 63 µm was prepared by milling 20g of the hydrogen storage alloy powder equal to that used in Example 1. The milling treatment was carried out for 1 hour under the air atmosphere within a stainless steel ball mill. Then, 2.8g of a nickel powder having an average particle diameter of 0.2 µm was added to the hydrogen storage alloy powder thus prepared. The resultant mixture was put in a plastic bottle, and a mixed powder consisting of the hydrogen storage alloy and nickel was prepared by vibrating the bottle.

### Controls 1 to 4

Milled mixtures were prepared as in Examples 1 to 4, except that a mortar was used in place of the ball mill.

Further, AA size sealed cell were prepared by using the milled powdery mixtures prepared in Examples 1-4, Controls 1-4, and Prior Art 1 as negative electrodes, known nickel hydroxide electrodes having a capacity of 1300 mAh as positive electrodes, and separators. In preparing the negative electrode, a mixture consisting of 99.5 parts by weight of the mixed powder and 0.5 part by weight of polytetrafluoroethylene was kneaded, followed by rolling the kneaded mixture to prepare a sheet. Then, the sheet was laminated on a nickel net, followed by rolling the resultant laminate structure and subsequently cutting the rolled laminate structure in a predetermined size so as to obtain the negative electrode.

The cells thus prepared were subjected to the charge/discharge cycling with a current of 0.2 C (260 mA). The charging was set at 150% of the design capacity (nickel electrode capacity of 1300 mAh), and the discharge stop voltage was set at 1.00V. The relationship between the cycling number of charge/ discharge in the initial stage and the discharge capacity was measured for each of the cells thus prepared, with the results as shown in Figs. 1 and 2.

As apparent from Figs. 1 and 2, the cells using the hydrogen storage alloy electrodes for Examples 1-4 exhibited a large initial discharge capacity. It is seen that the design discharge capacity of 1300 mAh was reached before 20 cycles of the charge/discharge. When it comes to the cell prepared by using the hydrogen storage alloy electrode of Prior Art 1, however, the discharge capacity was increased very slowly with increase in the cycling number of the charge/discharge. The discharge capacity was only about 100 mAh even after 40 cycles of the charge/discharge.

On the other hand, the cells prepared by using the hydrogen storage alloy electrodes of Controls 1-4 exhibited initial discharge capacities larger than that of the cell prepared by using the hydrogen storage alloy electrode of Prior Art 1. However, the cells for Controls 1-4 were markedly smaller in the discharge capacity than those of Examples 1-4, failing to reach the design capacity of 1300 mAh.

Still further, a cell was prepared as above by using as a hydrogen storage alloy a Laves phase alloy of Zr_{0.9}Ti_{0.1}(V_{0.33}Ni_{0.51}Fe_{0.08}Mn_{0.08})_{2.4}. The relationship between the cycling number of charge/discharge in the initial stage and the discharge capacity was measured for the cell thus prepared. The initial discharge capacity was found to be as large as that of the cells using the hydrogen storage alloy electrodes of Examples 1-4. It was also recognized that the design capacity of 1300 mAh was reached before 20 cycles of the charge/ discharge.

### Example 5

A mixture consisting of 96 parts by weight of an alloy powder having an average particle diameter of about 63 µm, which was prepared by pulverizing an alloy of Zr_{0.9}Ti_{0.1}(V_{0.33}Ni_{0.51}Co_{0.08}Mn_{0.08})_{2.4}, and 4 parts by weight of a nickel powder was milled in a stainless steel ball mill for 5 hours under the air atmosphere so as to obtain a milled powdery mixture. Then, 1.5% by weight of a PTFE powder was added to the milled powdery mixture, followed by pressing 1g of the resultant powdery mixture against a substrate of a circular nickel net having an outer diameter of 20 mm under a pressure of 3 tons/cm² so as to obtain a hydrogen storage alloy electrode sheet.

### Example 6

A hydrogen storage alloy electrode sheet was prepared by applying a heat treatment at 200°C for 2 hours under a reduced pressure to a hydrogen storage alloy electrode sheet equal to that of Example 5 so as to obtain a hydrogen storage alloy electrode sheet.

### Control 5

A mixed powder was prepared by adding 1.5% by weight of a PTFE powder to 1g of an alloy powder having an average particle diameter of about 63 µm, which was prepared in advance by pulverizing an alloy of Zr_{0.9}Ti_{0.1}(V_{0.33}Ni_{0.51}Co_{0.08}Mn_{0.08})_{2.4}. Then, the mixed powder was pressed against a substrate of a circular nickel net having an outer diameter of 20 mm under a pressure of 3 tons/cm² so as to prepare a hydrogen storage alloy electrode sheet.

### Control 6

A hydrogen storage alloy electrode sheet was prepared as in Control 5, except that 3% by weight of a PTFE powder was added to the hydrogen storage alloy powder in preparing the mixed powder.

### Control 7

A mixed powder was prepared by adding 4 parts by weight of a nickel powder to 96 parts by weight g of an alloy powder having an average particle diameter of about 63 µm, which was prepared in advance by pulverizing a Zr_{0.9}Ti_{0.1}(V_{0.33}Ni_{0.51}CO_{0.08}Mn_{0.08})_{2.4} alloy, followed by adding 1.5% by weight of a PTFE powder to the resultant mixed powder. Then, the mixed powder was pressed against a substrate of a circular nickel net as in Control 5 so as to prepare a hydrogen storage alloy electrode sheet.

### Control 8

A hydrogen storage alloy electrode sheet was prepared as in Control 7, except that 3% by weight of a PTFE powder was added to the mixed powder.

The maximum discharge capacity, the cycling number of charge/discharge leading to 10% reduction in the discharge capacity, and the state of the electrode (durability) were measured for each of the hydrogen storage alloy electrode sheets prepared in Examples 5 and 6 and Controls 5-8. Table 2 shows the results. It has been found that the discharge capacity was increased with increase in the cycling number of charge/discharge in the initial stage and, then, the discharge capacity was gradually decreased.

**Table 2**

| | Maximum discharge capacity (mAh/g) | The cycling number of charge/discharge reaching 10% reduction of discharge capacity | Electrode state during charge/discharge cycling |
|---|---|---|---|
| Example 5 | 343 | at least 200 | No dropping of alloy |
| Example 6 | 334 | at least 200 | No dropping of alloy |
| Control 5 | 267 | 79 | Some dropping of alloy |
| Control 6 | 249 | 103 | Some dropping of alloy |
| Control 7 | 312 | 99 | Some dropping of alloy |
| Control 8 | 287 | at least 200 | No dropping of alloy |

As apparent from Table 2, the alloy dropping from the electrode was scarcely recognized during the charge/discharge cycling in the hydrogen storage alloy electrode sheets for Examples 5 and 6. In addition, a 10% reduction in the discharge capacity was not recognized even when the charge/discharge cycling were repeatedly carried out 200 times. Further, the electrode sheets for Examples 5 and 6 exhibited a high discharge capacity.

On the other hand, the alloy dropping from the electrode was recognized during the charge/discharge cycling, leading to a small discharge capacity, in the hydrogen storage alloy electrode sheets for Controls 5 and 6 in which a mixed powder consisting of a hydrogen storage alloy powder and a PTFE powder was pressed against a substrate for preparing the hydrogen storage alloy electrode sheet. The alloy dropping was also recognized in Control 7 in which a mixed powder prepared by simply mixing a nickel powder and a PTFE powder with a hydrogen storage alloy powder was pressed against a substrate for preparing the hydrogen storage alloy electrode sheet. Of course, the discharge capacity was small in Control 7. In Control 8, the amount of the PTFE powder was increased to 3% by weight. In this case, the electrode exhibited a satisfactory durability, but was small in the discharge capacity.

In the Examples described above, a nickel powder was added to a hydrogen storage alloy powder. However, it is possible to use a copper powder in place of the nickel powder, with substantially the same effect. It is also possible to use a PDVF powder in place of the PTFE powder used in the Examples described above, with substantially the same effect.

A closed type nickel-hydrogen cell of AA size was prepared by using in combination a negative electrode prepared by the method of the present invention and a nickel hydroxide positive electrode prepared by the conventional paste method. The characteristics of the cell was found to be substantially equal in the produced effect to the cell prepared by the method of the present invention. Further, a hydrogen storage alloy electrode sheet prepared by using another Laves phase alloy containing Zr or MmNi₅-based alloy has been found to be substantially equal in the produced effect to the hydrogen storage alloy electrodes of the Examples described above.

As described above, a mixture consisting of a hydrogen storage alloy powder and another metal powder is milled in a closed system in the present invention, with the result that the surface of the hydrogen storage alloy powder particle is covered with the metal, making it possible to prevent the alloy powder from being oxidized. It follows that the hydrogen storage alloy exhibits a high reactivity over a long period of time. Naturally, the hydrogen storage alloy electrode prepared by the method of the present invention exhibits a high discharge capacity over a long period of time. In addition, the electrode is excellent in its durability and preservation capability.

## Claims

1. A method of manufacturing a hydrogen storage alloy electrode, comprising the steps of:
- mixing a hydrogen storage alloy powder with a powder of at least one metal selected from the group consisting of Ni, Co and Cu to obtain a mixed powder;
- milling said mixed powder in a milling apparatus with a closed system to obtain a milled powdery mixture and whereby an oxide film is removed from the surface of the hydrogen storage alloy powder;
- adding a binder to the milled powdery mixture in an amount not larger than 1.5 % by weight; and
- preparing a hydrogen storage alloy electrode by applying pressure to the milled powdery mixture disposed directly on a conductive substrate.

2. The method of manufacturing a hydrogen storage alloy electrode according to Claim 1, wherein said hydrogen storage alloy is a Zr-V-Ni pseudo-binary Laves phase system alloy.

3. The method of manufacturing a hydrogen storage alloy electrode according to Claim 2, wherein said Zr-V-Ni pseudo-binary Laves phase system alloy is represented by a formula:
Zr₁₋ₐTiₐ(V_{0.33+x}Ni_{0.67-x-b}A_{b})_{2+c}
where 0 < a < 0.7, -0.05 < x < 0.07, 0 < b < 0.4, 0 < c < 1, A = Fe, Co, Mn.

4. The method of manufacturing a hydrogen storage alloy electrode according to Claim 1, wherein said milling apparatus is a ball mill.

5. The method of manufacturing a hydrogen storage alloy electrode according to Claim 1, wherein said hydrogen storage alloy powder is a powder consisting of coarse particles having an average diameter of one to several millimeters.

6. The method of manufacturing a hydrogen storage alloy electrode according to Claim 1, wherein said binder is a polytetrafluoroethylene powder or a polyvinylidene fluoride powder.

7. The method of manufacturing a hydrogen storage alloy electrode according to Claim 1, which further comprises the step of applying a heat treatment at a temperature not higher than 1100 °C after application of pressure to the milled powdery mixture disposed directly on a conductive substrate.

8. A powder for preparation of a hydrogen storage alloy electrode comprising a mixture of a hydrogen storage alloy powder and a powder of at least one metal selected from the group consisting of Ni, Co and Cu, and wherein at least a part of the particles of said hydrogen storage alloy powder being covered with said at least one metal with no oxide film interposed therebetween.

## Patentansprüche

1. Verfahren zur Herstellung einer Elektrode aus wasserstoffspeichernder Legierung, umfassend die Schritte:
- Mischen eines wasserstoffspeichernden Legierungspulvers mit einem Pulver von mindestens einem Metall, ausgewählt aus der Gruppe bestehend aus Ni, Co und Cu, um ein gemischtes Pulver zu erhalten;
- Mahlen dieses gemischten Pulvers in einer Fräsvorrichtung eines geschlossenen Systems, um eine gemahlene pulvrige Mischung zu erhalten und wobei ein Oxidfilm von der Oberfläche des wasserstoffspeichernden Legierungspulvers entfernt wird;
- Zugeben eines Bindemittels zu der gemahlenen pulvrigen Mischung in einer Menge von nicht größer als 1,5 Gew.-%; und
- Herstellen einer Elektrode aus wasserstoffspeichernder Legierung indem Druck auf die gemahlene pulvrige Mischung, die direkt auf einem leitenden Substrat abgeschieden wird, angewendet wird.

2. Verfahren zur Herstellung einer Elektrode aus wasserstoffspeichernder Legierung gemäß Anspruch 1, wobei die wasserstoffspeichernde Legierung eine Zr-V-Ni pseudobinäre Lavesphasensystemlegierung ist.

3. Verfahren zur Herstellung einer Elektrode aus wasserstoffspeichernder Legierung gemäß Anspruch 1, wobei die Zr-V-Ni pseudobinäre Lavesphasensystemlegierung durch die Formel:
Zr₁₋ₐTiₐ(V_{0,33+x}Ni_{0,67-x-b}A_{b})_{2+c}
dargestellt ist, worin 0 ≤ a ≤ 0,7, -0,05 < x < 0,07, 0 < b ≤ 0,4, 0≤ c ≤ 1, A = Fe, Co, Mn bedeutet.

4. Verfahren zur Herstellung einer Elektrode aus wasserstoffspeichernder Legierung gemäß Anspruch 1, worin die Fräsvorrichtung eine Kugelmühle ist.

5. Verfahren zur Herstellung einer Elektrode aus wasserstoffspeichernder Legierung gemäß Anspruch 1, worin das wasserstoffspeichernde Legierungspulver ein Pulver, bestehend aus groben Teilchen mit einem durchschnittlichen Teilchendurchmesser von 1 bis mehreren mm, ist.

6. Verfahren zur Herstellung einer Elektrode aus wasserstoffspeichernder Legierung gemäß Anspruch 1, worin das Bindemittel ein Polytetrafluorethylen-Pulver oder ein Polyvinylidenfluorid-Pulver ist.

7. Verfahren zur Herstellung einer Elektrode aus wasserstoffspeichernder Legierung gemäß Anspruch 1, das außerdem nach Anwendung des Drucks auf die gemahlene pulvrige Mischung, die direkt auf ein leitendes Substrat aufgebracht wird, einen Wärmebehandlungsschritt bei einer Temperatur von nicht mehr als 1100°C vorsieht.

8. Pulver zur Herstellung einer Elektrode aus wasserstoffspeichernder Legierung, umfassend eine Mischung aus einem wasserstoffspeichernden Legierungspulver und einem Pulver aus mindestens einem Metall, ausgewählt aus der Gruppe bestehend aus Ni, Co und Cu, und worin mindestens ein Teil der Teilchen des wasserstoffspeichernden Legierungspulvers mit mindestens einem Metall beschichtet wird, wobei kein Oxidfilm dazwischenliegt.

## Revendications

1. Procédé de fabrication d'une électrode en alliage emmagasinant l'hydrogène, comprenant les étapes consistant à:
- mélanger une poudre d'alliage emmagasinant l'hydrogène avec une poudre d'au moins un métal choisi dans le groupe constitué par Ni, Co et Cu, pour obtenir une poudre mélangée;
- broyer ladite poudre mélangée dans un appareil de broyage avec un système fermé pour obtenir un mélange pulvérulent broyé, ce qui permet d'éliminer un film d'oxyde de la surface de la poudre d'alliage emmagasinant l'hydrogène;
- ajouter un liant au mélange pulvérulent broyé, en quantité non supérieure à 1,5% en poids; et
- préparer une électrode à alliage emmagasinant l'hydrogène en appliquant une pression au mélange pulvérulent broyé placé directement sur un substrat conducteur.

2. Procédé de fabrication d'une électrode en alliage emmagasinant l'hydrogène selon la revendication 1, dans lequel ledit alliage emmagasinant l'hydrogène est un alliage Zr-V-Ni de type système pseudobinaire à phase de Laves.

3. Procédé de fabrication d'une électrode en alliage emmagasinant l'hydrogène selon la revendication 2, dans lequel ledit alliage Zr-V-Ni de type système pseudobinaire à phase de Laves est représenté par la formule:
Zr₁₋ₐTiₐ(V_{0,33+x}Ni_{0,67-x-b}A_{b})_{2+c}
dans laquelle 0 ≤ a ≤ 0,7, -0,05 < x < 0,07, 0 < b ≤ 0,4, 0 ≤ c ≤ 1, A = Fe, Co, Mn.

4. Procédé de fabrication d'une électrode en alliage emmagasinant l'hydrogène selon la revendication 1, dans lequel ledit appareil de broyage est un broyeur à billes.

5. Procédé de fabrication d'une électrode en alliage emmagasinant l'hydrogène selon la revendication 1, dans lequel ladite poudre d'alliage emmagasinant l'hydrogène est une poudre constituée de grosses particules ayant un diamètre moyen d'un à plusieurs millimètres.

6. Procédé de fabrication d'une électrode en alliage emmagasinant l'hydrogène selon la revendication 1, dans lequel ledit liant est une poudre de polytétrafluoroéthylène ou une poudre de poly(fluorure de vinylidène).

7. Procédé de fabrication d'une électrode en alliage emmagasinant l'hydrogène selon la revendication 1, qui comprend, en outre, l'étape consistant à appliquer un traitement thermique à une température non supérieure à 1 100°C après l'application d'une pression au mélange pulvérulent broyé placé directement sur un substrat conducteur.

8. Poudre pour la préparation d'une électrode à alliage emmagasinant l'hydrogène comprenant un mélange d'une poudre d'alliage emmagasinant l'hydrogène et d'une poudre d'au moins un métal choisi dans le groupe constitué par Ni, Co et Cu, et dans laquelle au moins une partie des particules de ladite poudre d'alliage emmagasinant l'hydrogène est recouverte dudit au moins un métal sans que soit intercalé entre les deux un film d'oxyde.
